Europäisches Patentamt

European Patent Office

Office européen des brevets

(11) Veröffentlichungsnummer: **0 537 216 B1**

## (12) EUROPÄISCHE PATENTSCHRIFT

(45) Veröffentlichungstag der Patentschrift: **14.12.94**

(21) Anmeldenummer: **91911822.4**

(22) Anmeldetag: **25.06.91**

(86) Internationale Anmeldenummer:
**PCT/EP91/01177**

(87) Internationale Veröffentlichungsnummer:
**WO 92/01109 (23.01.92 92/03)**

(51) Int. Cl.⁵: **D21C 5/02**

(54) **VERFAHREN ZUM DEINKING VON BEDRUCKTEN PAPIEREN.**

(30) Priorität: **04.07.90 DE 4021275**

(43) Veröffentlichungstag der Anmeldung:
**21.04.93 Patentblatt 93/16**

(45) Bekanntmachung des Hinweises auf die
Patenterteilung:
**14.12.94 Patentblatt 94/50**

(84) Benannte Vertragsstaaten:
**AT BE DE FR GB IT NL**

(56) Entgegenhaltungen:
**EP-A- 0 286 019**
**EP-A- 0 373 375**
**EP-A- 0 394 690**
**WO-A-91/03599**

(73) Patentinhaber: **BASF Aktiengesellschaft**
**Carl-Bosch-Strasse 38**
**D-67063 Ludwigshafen (DE)**

(72) Erfinder: **LORENCAK, Primoz**
**Berner Weg 32**
**D-6700 Ludwigshafen (DE)**
Erfinder: **LINHART, Friedrich**
**Richard-Kuhn-Strasse 37**
**D-6900 Heidelberg (DE)**
Erfinder: **BOECKH, Dieter**
**Trifelsring 63**
**D-6703 Limburgerhof (DE)**
Erfinder: **HARTMANN, Heinrich**
**Weinheimer Strasse 46**
**D-6703 Limburgerhof (DE)**

**Beschreibung**

Die Erfindung betrifft ein Verfahren zum Deinking von bedruckten Papieren durch Wasch- oder Flotationsdeinking, bei dem man jeweils als Prozesshilfsmittel wasserlösliche oder in Wasser dispergierbare polymere amphiphile Verbindungen einsetzt.

Die Wiederverwertung von Altpapier gewinnt heutzutage aus ökonomischen und ökologischen Gründen an Bedeutung. Einige Papiersorten, beispielsweise Karton oder Pappe, können direkt aus Altpapierstoffen hergestellt werden. Um aber aus Altpapier bedruckbare Papiere herstellen zu können, muß man die Druckfarbe, die dem Altpapier anhaftet, entfernen. Erst dann erhält man einen Altpapierstoff, aus dem man bedruckbares Papier durch übliches Entwässern auf Sieben von Papiermaschinen herstellen kann. Der heutige Stand der Deinking-Technologie ist in dem Übersichtsartikel von H.L. Baumgarten, H. Großmann und J. Weigl, Das Papier, 42. Jahrgang, Heft 10A, Seiten V166-V177 (1988), beschrieben.

Beim Deinking-Prozeß wird das bedruckte Papier bzw. Altpapier zunächst in wäßrigem Medium zu einem Altpapierstoff aufgeschlagen, der dann entweder durch eine Wäsche oder durch Flotation gereinigt wird. Für jeden Teilschritt des Deinkingverfahrens benötigt man bestimmte Prozeßchemikalien. So erfolgt beispielsweise das Zerfasern des Altpapierstoffs in Gegenwart von Alkalien, wie Natronlauge, Wasserglas oder auch Mischungen aus Natronlauge und Wasserglas. Außerdem werden üblicherweise Tenside, Wasserstoffperoxid und gegebenenfalls Komplexbildner als Prozeßchemikalien verwendet. Sofern die Reinigung des Altpapierstoffs mit Hilfe eines Flotationsverfahrens vorgenommen wird, benötigt man zusätzlich Sammler, wie Natrium- oder Kaliseifen, um die von den Cellulosefasern abgelösten Druckfarbenbestandteile in dem zerfaserten Altpapierstoff zu größeren Agglomeraten zusammenzulagern. Die Effizienz der Deinkingverfahren wird mit Hilfe des Weißgradanstiegs von Papierblättern aus deinktem Altpapierstoff gegenüber Papierblättern aus dem gleichen aber nicht deinktem Altpapierstoff bestimmt.

Aus der DE-A 3 401 444 ist ein verfahren zum Entfärben und zur Regenerierung von Abfallpapier bei der Flotationsbehandlung und Herstellung eines entfärbten Altpapierstoffs bekannt, bei dem man als Entfärbungsmittel alkoxilierte Carbonsäuren mit 8 bis 22 Kohlenstoffatomen verwendet. Das Wasserstoffatom der endständigen OH-Gruppe der alkoxilierten langkettigen Carbonsäuren kann gegebenenfalls durch eine Alkyl- oder Acylgruppe ersetzt sein.

Aus der GB-A-2 178 079 ist ein Verfahren zum Deinking von Altpapier bekannt, bei dem man das Zerfasern des Altpapiers in Gegenwart von üblichen Deinking-Prozeßchemikalien und Salzen von bestimmten Polymeren als Beschleuniger durchführt. Geeignete Polymerisate für dieses Deinking-Verfahren sind beispielsweise Homo- und Copolymerisate von Acrylsäure, Methacrylsäure und Maleinsäure. Geeignete Copolymerisate enthalten beispielsweise Acrylsäure und Acrylsäureester von Polyalkylenglykolen oder von alkoxilierten Alkoholen einpolymerisiert. Die Wirksamkeit dieser Polymerisate und die der alkoxilierten langkettigen Carbonsäuren beim Deinking ist noch verbesserungsbedürftig.

Aus der DE-A 38 39 478 und der DE-A 38 39 479 sind Verfahren zum Deinken von Altpapieren in Gegenwart von mindestens teilweise wasserlöslichen amino- und/oder ammoniumgruppenhaltigen Polymeren bekannt.

Aus der nicht vorveröffentlichten EP-A-0 394 690 sind Deinkingmittel bekannt, die aus amphiphilen Verbindungen bestehen können. Diese Mittel enthalten jedoch immer zwingend ionische Monomere einpolymerisiert, z.B. Carboxylat- oder Sulfonatgruppen enthaltende Monomere.

Aus der älteren, nicht vorveröffentlichten WO-A-91/03599 ist u.a. bekannt, Polyester mit Molekulargewichten von 3000 bis 10000, die durch Reaktion von (1) Polyalkylenglykolen, (2) Di- und/oder Tricarbonsäuren und/oder deren Anhydriden und (3) Tallöl erhältlich sind, als Mittel zum Deinking von Altpapier zu verwenden.

Der vorliegenden Erfindung liegt die Aufgabe Zugrunde, andere Hilfsmittel als die bisher vorgeschlagenen für das Deinking-Verfahren zur Verfügung zu stellen.

Die Aufgabe wird erfindungsgemäß gelöst bei einem Verfahren zum Deinking von bedruckten Papieren durch Aufschlagen der bedruckten Papiere in wäßrigem Medium in Gegenwart von wasserlöslichen Polymerisaten zu einem Altpapierstoff und anschließender Reinigung des Altpapierstoffs durch Wäsche oder Flotation, wenn man als Polymerisate wasserlösliche oder in Wasser dispergierbare polymere amphiphile Verbindungen einsetzt, bei denen der hydrophile und der hydrophobe Teil jeweils aus kondensierten und/oder polymerisierten Monomereinheiten aufgebaut ist.

Die erfindungsgemäß zu verwendenden polymeren amphiphilen Verbindungen sind bekannt. Hierbei handelt es sich beispielsweise um Pfropfcopolymerisate, die 10 bis 90 Gew.-% nichtionische monoethylenisch ungesättigte Monomere auf wasserlöslichen Polyalkylenglykolen mit Molmassen von 300 bis 100 000 oder solche Polyalkylenglykolsegmente enthaltenden wasserlöslichen Verbindungen aufgepfropft enthalten. Diese Polymeren werden im folgenden als Gruppe I der amphiphilen Verbindungen bezeichnet. Pfropfcopo-

2

lymerisate dieser Art werden beispielsweise als Zusatz zu Waschmitteln verwendet, vgl. US-A 4 746 456, US-A 4 846 995, US-A 4 904 408 und US-A 4 846 994. Als Pfropfgrundlage zur Herstellung der erfindungsgemäß zu verwendenden amphiphilen Verbindungen kommen Polyalkylenglykole in Betracht, die sich von Alkylenoxiden mit 2 bis 4 Kohlenstoffatomen ableiten, wie Ethylenoxid, Propylenoxid und/oder Butylenoxid-1 und Butylenoxid-2. Die Pfropfgrundlage kann aus Polyethylenglykol bestehen oder aus Copolymeren von Ethylenoxid und Propylenoxid oder Ethylenoxid, Propylenoxid und Butylenoxid oder aus Copolymeren von Ethylenoxid und Butylenoxid. Die Alkylenoxide können in den Copolymeren in Form von einpolymerisierten Blöcken oder in statistischer Verteilung enthalten sein. Als Pfropfgrundlage kommen außerdem alkoxilierte Alkohole, alkoxilierte Amine und alkoxilierte Carbonsäuren in Betracht. Die alkoxilierten Verbindungen werden durch Anlagerung von Alkylenoxiden mit 2 bis 4 C-Atomen an Alkohole, Amine und/oder Carbonsäuren hergestellt. Als Alkohole eignen sich beispielsweise einwertige $C_1$-bis $C_{22}$-Alkohole, mehrwertige $C_2$- bis $C_8$-Alkohole sowie Amine, die mindestens eine freie NH-Gruppe enthalten. Von den Carbonsäuren kommen vorzugsweise $C_2$- bis $C_{18}$-Carbonsäuren in Betracht. Durch Anlagerung der Alkylenoxide an Alkohole, Amine und Carbonsäuren entstehen Verbindungen, die Polyalkylenglykolsegmente mit Molmassen von 300 bis 100 000 enthalten. Im Falle höhermolekularer Polyalkoxylierungsprodukte mit Molmassen größer 5000 können auch Mischungen dieser Polyalkylenoxide mit Glykolen oder Oligoglykolen als Pfropfgrundlage verwendet werden. Bei der Auswahl der Alkylenoxide, die mit Alkoholen, Aminen oder Carbonsäuren umgesetzt werden, ist lediglich darauf zu achten, daß man bei der Alkoxylierung wasserlösliche oder in Wasser dispergierbare Produkte erhält.

Auf die obengenannten wasserlöslichen Polyalkylenglykole oder deren Derivate werden nichtionische monoethylenisch ungesättigte Monomere aufgepfropft, indem man diese Monomeren in Gegenwart der Polyalkylenglykole oder Polyalkylenglykolsegmente enthaltenden wasserlöslichen Verbindungen polymerisiert. Geeignete nichtionische ethylenisch ungesättigte Monomere sind beispielsweise Vinylester, wie Vinylacetat, Vinylpropionat, Vinylbutyrat, Vinylpivaloat oder Vinylstearat sowie Ester monoethylenisch ungesättigter $C_3$- bis $C_6$-Carbonsäuren mit ein- oder mehrwertigen $C_1$- bis $C_8$-Alkanolen, wie Methylacrylat, Methylmethacrylat, Ethylacrylat, Ethylmethacrylat, n-Propylacrylat, Isopropylacrylat, n-Butylacrylat, Isobutylacrylat, tertiär-Butylacrylat, 2-Ethylhexylacrylat, Crotonsäuremethylester, Maleinsäuredimethylester, Maleinsäuredi-n-butylester und Vinylessigsäuremethylester. Die entstehenden Pfropfcopolymerisate enthalten 10 bis 90, vorzugsweise 30 bis 75 Gew.-% der oben beispielhaft genannten nichtionischen monoethylenisch ungesättigten Monomeren aufgepfropft.

Weitere nichtionische ethylenisch ungesättigte Monomere, die in den Pfropfcopolymerisaten enthalten sein können, sind beispielsweise Ethylen, Styrol, $\alpha$-Methylstyrol, Alkylvinylether, 1,2-Dimethoxyethylen, Vinylencarbonat, Vinylchlorid, Acylamid, Methacrylamid, Crotonsäureamid, Vinylessigsäureamid, Imide von Dicarbonsäure, Acrylnitril, Methacrylnitril, N-Vinylformamid, N-Methyl-N-Vinylformamid, N-Vinylacetamid und N-Vinylpyrrolidon.

Vorzugsweise verwendet man als nichtionische monoethylenisch ungesättigte Monomere Vinylacetat, Vinylpropionat und die Ester von $C_1$- bis $C_6$-Alkoholen von Acrylsäure oder Methacrylsäure.

Die Pfropfcopolymerisate können dadurch modifiziert werden, daß sie in Gegenwart von ionischen monoethylenisch ungesättigten Monomeren hergestellt werden. Hierfür eignen sich anionische Monomere, wie $C_3$- bis $C_8$-Carbonsäuren, beispielsweise Acrylsäure, Methacrylsäure, Crotonsäure, Maleinsäure, Itaconsäure, Citraconsäure und Vinylessigsäure sowie 2-Acrylamido-2-methylpropansulfonsäure, Vinylsulfonsäure, Allylsulfonsäure, Vinylphosphonsäure und Allylphosphonsäure. Die anionischen Monomeren werden entweder in Form der freien Säuren oder in Form der Alkali-, Ammonium- oder Erdalkalisalze eingesetzt. Zur Modifizierung der Pfropfcopolymerisate kann man auch kationische Monomere verwenden, beispielsweise Dialkylaminoalkylacrylate und -methacrylate, wie Dimethylaminoethylacrylat, Dimethylaminoethylmethacrylat, Diethylaminoethylacrylat, Diethylaminoethylmethacrylat, N-Vinylimidazol, N-Vinylimidazolin und 1-Vinyl-2-methyl-2-imidazolin. Die kationischen Monomeren werden entweder in Form der freien Basen, als Salze oder in quaternisierter Form bei der Pfropfcopolymerisation eingesetzt. Die zur Modifizierung der Pfropfcopolymerisate verwendeten Mengen an anionischen oder kationischen Monomeren betragen 0 bis 20, vorzugsweise 0 bis 5 Gew.-%, bezogen auf die Pfropfcopolymerisate.

Die Pfropfcopolymerisate sind in Wasser löslich bzw. in Wasser dispergierbar. Sie haben K-Werte von 10 bis 100, vorzugsweise 12 bis 50 (bestimmt nach H. Fikentscher in 2 %iger wäßriger Lösung bei 25°C oder in 2 % Lösung in Dimethylformamid bei 25°C, wobei die K-Werte der wasserlöslichen Polymerisate in wäßriger Lösung und die der in Wasser dispergierbaren Polymerisate in Dimethylformamid bestimmt werden).

Als Gruppe II der amphiphilen Verbindungen kommen Copolymerisate aus 10 bis 90 Gew.-% nichtionischen monoethylenisch ungesättigten Monomeren und 90 bis 10 Gew.-% Polyalkylenglykolsegmente einer Molmasse von 400 bis 10 000 enthaltenden ethylenisch ungesättigten Verbindungen in Betracht. Geeignete

EP 0 537 216 B1

nichtionische monoethylenisch ungesättigte Monomere wurden bereits bei den amphiphilen Verbindungen der Gruppe I genannt. Hierbei handelt es sich um Vinylester, vorzugsweise Vinylacetat und Vinylpropionat oder um Ester monoethylenisch ungesättigter $C_3$- bis $C_6$-Carbonsäuren mit ein- oder mehrwertigen $C_1$- bis $C_8$-Alkoholen. Die nichtionischen monoethylenisch ungesättigten Monomeren sind vorzugsweise zu 30 bis 75 Gew.-% am Aufbau der amphiphilen Copolymerisate beteiligt. Die nichtionischen Monomeren bilden dabei den hydrophoben Teil des Moleküls. Bei höheren Anteilen an nichtionischen monoethylenisch ungesättigten Strukturen im Copolymerisat liegen wäßrige Dispersionen vor, die vorzugsweise angewendet werden und bei denen der K-Wert der Copolymerisate in Dimethylformamid bestimmt wird.

Der hydrophile Teil des Moleküls der amphiphilen Verbindungen wird von ethylenisch ungesättigten Verbindungen gebildet, die Polyalkylenglykolsegmente einer Molmasse von 400 bis 10 000 enthalten. Bei diesen Verbindungen handelt es sich beispielsweise um Mono- oder Diester aus monoethylenisch ungesättigten $C_3$- bis $C_6$-Carbonsäuren und Polyalkylenglykolen, z.B. Polyethylenglykolmonoacrylat, Polyethylenglykoldiacrylat, Polyethylenglykolmonomethacrylat, Polyethylenglykoldimethacrylat, Polyethylenglykolmonomaleinat, Polyethylenglykoldimaleinat, Polyethylenglykolmonofumarat, Polyethylenglykoldifumarat, Polyethylenglykolmonoitakonat und Polyethylenglykoldiitakonat. Anstelle von Ethylenglykolsegmenten können in den genannten Mono- und Di-Estern auch solche Segmente eingebaut sein, die Ethylenglykol- und Propylenglykoleinheiten oder Ethylenglykol und Butylenglykol und/oder Propylenglykoleinheiten einpolymerisiert enthalten. Die Alkylenglykol-Einheiten können in Form von Blöcken vorliegen oder statistisch in den Polyalkylenglykolsegmenten verteilt sein. Außerdem eignen sich Acrylate, Methacrylate, Maleinate, Fumarate und Itakonate von ethoxylierten ein- oder mehrwertigen Alkoholen oder Aminen. An die Amine oder Alkohole kann dabei Ethylenoxid allein oder in Mischung mit Propylenoxid und/oder Butylenoxid angelagert sein. Als Alkohole kommen beispielsweise einwertige $C_1$- bis $C_{18}$-Alkohole in Betracht sowie mehrwertige Alkohole mit 2 bis 6 Kohlenstoffatomen, z.B. Ethylenglykol, Glycerin, Pentaerythrit und Sorbit.

Um bei Verwendung von mehrfach ethylenisch ungesättigten Comonomeren, die Polyalkylenglykolsegmente enthalten, wasserlösliche oder in Wasser dispergierbare Copolymerisate zu erhalten, wird die Polymerisation bekanntlich in Gegenwart von Reglern und/oder größeren Mengen an Polymerisationsinitiatoren durchgeführt als sonst bei Polymerisationen üblicherweise angewendet werden, z.B. Initiatormengen von 2 bis 20 Gew.-%. Die Mengen an Polymerisationsreglern, beispielsweise Mercaptoethanol oder Dodecylbenzol, betragen 0,2 bis 10 Gew.-%, bezogen auf das Gewicht der eingesetzten Monomeren. Die Copolymerisation kann auch in regelnden Lösemitteln, wie Isopropanol durchgeführt werden.

Besonders bevorzugt verwendet man als amphiphile polymere Verbindungen der Gruppe II Copolymerisate aus Vinylestern und Mono- oder Diestern aus Polyethylenglykolen einer Molmasse von 600 bis 2500 und monoethylenisch ungesättigten $C_3$- bis $C_5$-Carbonsäuren. Die K-Werte der Copolymerisate betragen 10 bis 100 (bestimmt nach H. Fikentscher in 2 %iger wäßriger Lösung bei 25°C oder in 2 %iger Lösung in Dimethylformamid bei 25°C, wobei lediglich die K-Werte der Polymerisatdispersionen in Dimethylformamid bestimmt werden.).

Als polymere amphiphile Verbindungen der Gruppe III kommen Polykondensate in Betracht, die erhältlich sind durch Kondensieren von mindestens 2 Carboxylgruppen aufweisenden Carbonsäuren oder Diisocyanaten, wasserlöslichen Polyalkylenglykolen mit Molmassen von 300 bis 10 000 oder solche Polyalkylenglykolsegmente enthaltenden gesättigten Verbindungen. Die Kondensation kann in Gegenwart von mehrwertigen Alkoholen durchgeführt werden, z.B. Ethylenglykol, Propylenglykol, Butylenglykol, Hexandiol, Cyclohexandiol, Glycerin, Oligoglycerin und Pentaerythrit. Als Komponente (a) zur Herstellung der Polyester kommen aromatische oder aliphatische mehrwertige Carbonsäuren, Carbonester und Carbonamide oder Carbonsäureanhydride oder mehrwertige Isocyanate in Betracht, beispielsweise Terephthalsäure, Phthalsäure, Isophthalsäure, Oxalsäure, Malonsäure, Bernsteinsäure, Dodecenylbernsteinsäure, Dodecylbernsteinsäure, Octenylbernsteinsäure, Octylbernsteinsäure, Adipinsäure, Mellithsäure, Sulfophthalsäure, Sulfoisophthalsäure, Sulfobernsteinsäure, Toluylendiisocyanat und Hexamethylendiisocyanat. Als Komponente (b) zur Herstellung der Polyester werden wasserlösliche Polyalkylenoxide bzw. alkoxilierte ein- oder mehrwertige Alkohole oder mit Alkylenoxiden modifizierte Amine mit Molmassen bis zu 10 000 eingesetzt. Die Polyalkylenglykolsegmente enthaltenden Verbindungen bilden in kondensiertem Zustand den hydrophilen Teil des amphiphilen Moleküls. Bei den Polyalkylenglykolen kann es sich sowohl um Homopolymerisate von Ethylenoxid, als auch um deren Copolymerisate mit Propylenoxid oder Butylenoxid sowie um alkoxilierte Fettalkohole und alkoxilierte mehrwertige Alkohole, wie Hexandiol, Glycerin und Pentaerythrit handeln. Vorzugsweise verwendet man als polymere amphiphile Verbindungen der Gruppe III Polyester aus

(a) Terephthalsäure, Phthalsäure, Isophthalsäure, Bernsteinsäure, Dodecenylbernsteinsäure, Dodecylbernsteinsäure, Octenylbernsteinsäure, Octylbernsteinsäure, Adipinsäure oder deren Gemische,

(b) Polyalkylenglykole oder ethoxylierte ein- oder zweiwertige Alkohole mit Molmassen von 600 bis 5000 und gegebenenfalls

4

(c) Ethylenglykol, Propylenglykol oder Glycerin

eines Molekulargewichts von 1200 bis 30 000. Die Herstellung solcher Polyester ist bekannt, vgl. US-A 4 849 126.

Die polymeren amphiphilen Verbindungen werden bei Deinking-Verfahren von bedruckten Papieren bzw. von Altpapier eingesetzt. Man kann sowohl die reinen Komponenten, als auch Mischungen verschiedener amphiphiler Verbindungen sowie deren Abmischungen mit Formulierungshilfsmitteln als wäßrige Lösung oder Dispersion verwenden. Als reine Komponenten können die amphiphilen Polymeren je nach ihrer Erweichungstemperatur in Form von Pulvern, Granulaten, Pasten oder Schmelzen zum Einsatz gelangen. Die Abmischungen können ohne weitere Zusätze oder in Form von Lösungen oder Dispersionen mit Wasser und/oder anderen geeigneten Verdünnungsmitteln eingesetzt werden. Die Abmischungen können homogen oder heterogen zusammengesetzt sein. Besonders einheitliche Abmischungen können durch Sprühtrocknen, Sprühwirbelschichttrocknen von Lösungen der Abmischkomponenten oder durch Abkühlen von Schmelzen der Mischungen unter Versprühen (Prillen), Pilletierung oder anderen Formen der Aufarbeitung erhalten werden.

Die amphiphilen Polymeren werden bevorzugt in Form ihrer Lösungen und/oder Dispersionen in verschiedenen Verdünnungsmitteln eingesetzt werden. Bevorzugtes Verdünnungsmittel ist Wasser. Es können aber auch Mischungen von Wasser mit wasserlöslichen organischen Lösemitteln, wie beispielsweise ein- oder mehrwertigen Alkoholen, wie Methanol, Ethanol, n-Propanol, Isopropanol, Ethylenglykol, Propylenglykol, Glycerin, Oligoalkylenoxide mit bis zu 10 Alkylenoxideinheiten oder alkoxilierten $C_1$- bis $C_{18}$-Alkoholen bis zu 10 Alkylenoxideinheiten eingesetzt werden. Um stabile Lösungen, Emulsionen oder Dispersionen zu erzielen, können übliche Lösevermittler, Emulgatoren, Dispergatoren und Schutzkolloide zugesetzt werden.

Die oben beschriebenen amphiphilen Verbindungen werden als Mittel zum Deinking von Altpapier verwendet. Unter Altpapier werden sämtliche Papierqualitäten verstanden, die zur Einsparung von Rohstoffen zurückgeführt werden. Hierbei handelt es sich hauptsächlich um bedruckte Erzeugnisse, wie Zeitungen, Illustrierte, Kataloge, Telefonbücher, Werbungsträger (z.B. Wurfsendungen) und Verpackungsmaterial wie Pappen, Kartons usw. Zur Herstellung der Druckerzeugnisse können die bekannten Druckverfahren angewendet werden, z.B. Hochdruck, Offsetdruck, Tiefdruck und Flexodruck. Bei diesen Druckverfahren werden die dafür jeweils gebräuchlichen Druckfarben eingesetzt, beispielsweise sind im Hochdruck solche Druckfarben üblich, die ein organisches Lösemittel enthalten, während im Flexodruck wasserverdünnbare Druckfarben eingesetzt werden. Das wesentliche Ziel der Deinkingverfahren liegt darin, die Druckfarben von den Papierfasern zu entfernen.

Das Altpapier wird zur Rückgewinnung der Cellulosefasern in wäßrigem Medium aufgeschlagen, so daß daraus ein Altpapierstoff entsteht, der anschließend gereinigt wird. Das Zerfasern des Altpapiers in wäßrigem Medium geschieht erfindungsgemäß in Gegenwart der oben beschriebenen polymeren amphiphilen Verbindungen, die in einer Menge von 0,05 bis 5, vorzugsweise 0,1 bis 0,5 Gew.-%, bezogen auf das eingesetzte Altpapier, verwendet werden. Die erfindungsgemäß zu verwendenden polymeren amphiphilen Verbindungen können auch in Mischung mit Hydroxypropylmethylcellulose und/oder Methylcellulose als Mittel zum Deinking eingesetzt werden. Solche Mischungen können bis zu 60 Gew.-%, vorzugsweise 10 bis 50 Gew.-% an Hydroxypropylmethylcellulose und/oder Methylcellulose enthalten.

Damit eine ausreichende Abtrennung der Druckfarbenbestandteile von den Fasern des Altpapiers überhaupt eintritt, ist die Mitverwendung von Alkali erforderlich. Der pH-Wert des wäßrigen Mediums beim Zerfasern des Altpapiers liegt in dem Bereich von 8 bis 11. Er wird eingestellt durch Zugabe von Natronlauge oder Kalilauge in Mengen von etwa 0,5 bis 2 Gew.-%, bezogen auf trockenen Papierstoff und gegebenenfalls zusätzlich durch Zugabe von 1 bis 3 Gew.-%, ebenfalls bezogen auf trockenen Papierstoff, an Wasserglas. Die Einstellung des pH-Werts kann auch gegebenenfalls allein durch Zugabe von Wasserglas erfolgen. In vielen Fällen wird zum Deinking Wasserstoffperoxid eingesetzt. Die Mengen betragen 0,5 bis 1,5 Gew.-%, bezogen auf trockenen Faserstoff.

Während Tenside bei üblichen Deinking-Verfahren zwingend erforderlich sind, kann bei dem Einsatz der oben beschriebenen amphiphilen Verbindungen auf die Mitverwendung von Tensiden verzichtet werden. In einigen Fällen erreicht man dagegen nur dann gute Ergebnisse bezüglich des Weißgrads der zurückgewonnenen Papierfasern, wenn man beim Deinking Tenside mitverwendet. Die hierfür notwendigen Mengen betragen etwa 0,1 bis 0,5 Gew.-%, bezogen auf trockenen Faserstoff. Weitere Prozeßchemikalien sind Komplexbildner, wie Ethylendiamintetraessigsäure oder Diethylentriaminpentaessigsäure. Wasserglas und Komplexbildner stabilisieren das beim Deinking mitverwendete Peroxid gegen einen Metallionen katalysierten Zerfall. Als Stabilisatoren bzw. Komplexbildner können auch Phosphonsäurederivate, z.B. N,N-Bis-(carboxymethyl)-1-aminoethan-1,1-diphosphonsäure, N-(2-carboxymethyl)-1-aminoethan-1,1-diphosphonsäure, N,N-Bis(hydroxymethyl)-1-aminoethan-1,1-diphosphonsäure, 1,1,2-Tricarboxybutan-2-phosphonsäure, Diethylentriaminpentamethylenphosphonsäure, Hydroxyethandiphosphonsäure, Aminotrismethylenphosphonsäure und wasserlösliche Salze der genannten Säuren eingesetzt werden. Komplexbildner werden in Mengen von 0 bis 0,2 Gew.-%, bezogenen auf trockenen Stoff, eingesetzt. Die in Betracht kommenden Tenside können anionisch, kationisch, nichtionisch oder auch amphoter sein. In einigen Fällen kann die Anwendung von Tensidgemischen vorteilhaft sein. Die erste Stufe des Deinkings, d.h. das Aufschlagen des Altpapiers und das Ablösen der Druckfarbenbestandteile von den Papierfasern, erfolgt bei Temperaturen von 30 bis 70°C. In der zweiten Stufe des Deinkings wird der in der ersten Stufe gewonnene Altpapierstoff gereinigt. Diese Reinigung kann beispielsweise mit Hilfe eines Waschdeinkings vorgenommen werden. Hierbei entfernt man die Druckfarbenbestandteile im Papierstoff durch eine Wäsche der Cellulosefasern mit Wasser. Ein anderes Reinigungsverfahren besteht in der Flotation, bei der die Druckfarbenbestandteile aus dem aufgeschlagenen Altpapierstoff entfernt werden. Bei Flotationsverfahren verwendet man üblicherweise als weitere Prozeßchemikalie Sammler in Mengen von 0,1 bis 1 Gew.-%, bezogen auf trockenen Papierstoff. Die Sammler haben die Aufgabe, die abgelösten Druckfarbenpartikeln zu größeren Agglomeraten zu sammeln, die dann besser flotierbar sind. Als Sammler werden beispielsweise Natrium- und Kalium-Seifen eingesetzt. An das Flotations- und an das Wasch-Deinking kann sich gegebenenfalls noch eine reduktive Nachbleiche anschließen.

Nach dem erfindungsgemäßen Verfahren erhält man einen Altpapierstoff, aus dem Papierblätter mit Weißgraden herstellbar sind, die 2 bis 6 Prozentpunkte über den mit Standardverfahren erreichbaren Weißgraden liegen. Der zurückgewonnene Altpapierstoff kann direkt zu Papier verarbeitet werden oder auch durch Zugabe frischer Papierfasern, z.B. gebleichtem Nadelsulfatzellstoff, gebleichtem oder ungebleichtem TMP (Thermomechanische Pulpe) oder Holzschliff abgemischt werden.

Die in den Beispielen angegebenen Teile sind Gewichtsteile, die Angaben in Prozent beziehen sich auf das Gewicht der Stoffe. Die K-Werte der Polymerisate wurden nach H. Fikentscher, Cellulosechemie, Band 13, 58-64 und 71-74 (1932), bestimmt. Dabei bedeutet $K = k \cdot 10^3$. Die Messungen wurden an 2 %igen Lösungen der amphiphilen Polymeren in Wasser bzw. Dimethylformamid bei einem pH-Wert von 7 durchgeführt, wobei der K-Wert der wasserlöslichen Polymerisate jeweils in wäßriger Lösung und der K-Wert der in Wasser dispergierten Polymerisate immer in Dimethylformamid bestimmt wurde.

Herstellung der Polymeren

Polymere 1 bis 11

Die Pfropfcopolymere (Gruppe I der amphiphilen polymeren Verbindungen) werden durch Pfropfen der in Tabelle 1 genannten Monomeren (a) bzw. (c) auf die Polyalkylenoxide (b) erhalten. Die Polyalkylenoxide werden im Reaktor aufgeschmolzen und bei 75 bis 110°C unter gleichzeitigem Zudosieren von tert.-Butylperpivalat (20 %ig in Ethylacetat) und den Monomeren (a) bzw. (c) innerhalb von 4 bzw. 5 Stunden gepfropft. Nach Ende der Zugabe der Monomeren wird das Reaktionsgemisch 2 Stunden bei 80°C nachpolymerisiert. Anschließend destilliert man Ethylacetat und nicht umgesetzte Monomere im Vakuum bei ca. 10 Torr ab. Zur Prüfung werden die Pfropfpolymerisate in Wasser gelöst bzw. dispergiert. Sie werden mit Hilfe der in Tabelle 1 angegebenen K-Werte in Wasser bzw. Dimethylformamid charakterisiert.

Tabelle 1: Pfropfcopolymere

| Polymer Nr. | Komponente (a) | Komponente (b) | Komponente (c) | Gewichts-verhältnis (a:b:c) | K-Wert 2 % in Wasser | DMF |
|---|---|---|---|---|---|---|
| 1 | VAC | PEG-1500 | | 1.6:1 | 12.1 | - |
| 2 | VAC | PEG-6000 | | 4.0:1 | 40.3 | - |
| 3 | VAC | PEG-35000/DEG (1:1) | | 1.6:1 | - | 33.2 |
| 4 | VAC | PEG-6000 | | 2.0:1 | 17.1 | - |
| 5 | VAC | PEG-6000 | | 1.4:1 | 19.1 | - |
| 6 | VAC | PEG-6000 | tBA | 0.4:1:0.4 | - | 26.8 |
| 7 | tBA | PEG-6000 | | 1.0:1 | - | 25.4 |
| 8 | tBA | PEG-6000 | | 0.4:1 | - | 23.5 |
| 9 | VAC | PEG-6000 | AS | 1.36:1:0.24 | 39.5 | - |
| 10 | VPr | PEG-4000 | | 1.8:1 | 13.3 | - |
| 11 | VAC | C13/15H27/31O-EO50 | | 1.6:1 | 14.8 | - |

Die in der Tabelle verwendeten Abkürzungen haben folgende Bedeutung:

VAC: Vinylacetat
tBA: tert.-Butylacrylat
VPr: Vinylpropionat
DMF: Dimethylformamid

PEG-1500: Polyethylenglykol einer Molmasse (Zahlenmittel) von 1500
DEG: Diethylenglykol
AS: Acrylsäure
C13/15H27/31O-EO50: linearer C13/15-Alkohol mit 50 Ethylenoxideinheiten

Polymer 12

In einem mit Stickstoff gespülten 2 l Glasreaktor, der mit 4 Zulaufgefäßen und Rückflußkühler versehen ist, werden 410,8 g Wasser und 449,7 g Isopropanol bei 75°C vorgelegt. Gleichbeginnend werden als

7

getrennte Zuläufe innerhalb von 2 Stunden 180,0 g Methylacrylat und 240 g Polyethylenglykol($M_n = 1500$)-diacrylat (50 %ige Lösung in Wasser), gelöst in 100 ml Isopropanol, zudosiert, wobei durch die Monomeren vorher 10 min lang ein Stickstoffstrom durchgeleitet wird. Gleichbeginnend tropft man innerhalb von 2,5 Stunden bzw. 2,0 Stunden den Initiator (1,1 g 2,2'-Azobis(2-amidinopropan)dihydrochlorid als Lösung in 98,9 g Wasser) und den Regler (15,0 g Mercaptoethanol in 85 ml Wasser) zu. Nach einer weiteren Stunde bei 80°C wird 810 g Isopropanol/Wasser-Azeotrop abdestilliert und durch Zusatz von 5 %iger wäßriger Natronlauge auf pH = 6.0 gestellt. Der K-Wert in 2 %iger wäßriger Lösung bei pH = 7 beträgt 14,6.

Polymer 13

In einem mit Stickstoff gespülten 2 l Glasreaktor, der mit 4 Zulaufgefäßen und Rückflußkühler versehen ist, werden 1123 g Wasser bei 75°C vorgelegt. Gleichbeginnend werden als getrennte Zuläufe innerhalb von 2 h 240 g Vinylacetat und 258,6 g Polyethylenglykol($M_n = 1500$)-diacrylat (46,4 %ige Lösung in Wasser) zudosiert, wobei durch die Monomeren vorher 10 min lang ein Stickstoffstrom durchgeleitet wird. Gleichbeginnend werden innerhalb 2,5 bzw. 2,0 Stunden 0,96 g 2,2'-Azobis(2-amidinopropan)dihydrochlorid (Lösung in 99,04 g Wasser) sowie 2,7 g Mercaptoethanol (Lösung in 97,3 g Wasser) zudosiert. Nach einer weiteren Stunde bei 80°C wird abgekühlt und zur Kontrolle über ein Filter mit 100 µ filtriert. Im Filter wird kein Rückstand gefunden. Zur Bestimmung des K-Wertes wird die Dispersion bis zur Gewichtskonstanz eingedampft und das Produkt 2 %ig in Dimethylformamid gelöst; der K-Wert beträgt 32,5.

Polymer 14

In einem mit Stickstoff gespülten 2 l Glasreaktor, der mit 3 Zulaufgefäßen und Rückflußkühler versehen ist, werden 604,6 g Wasser und 19,8 g eines Anlagerungsproduktes von 25 mol Ethylenoxid an 1 mol p-Isooctylphenol als Emulgator bei 75°C vorgelegt. Gleichbeginnend wird eine Mischung aus 132 g Vinylacetat und 66,0 g eines einseitig methylverschlossenen Polyethylenglykol ($M_n = 500$)-acrylats innerhalb 2,5 Stunden und 0,53 g 2,2'-Azobis(2-amidinopropan)dihydrochlorid (Lösung in 99,47 g Wasser) sowie 1,98 g Mercaptoethanol (Lösung in 98,02 g Wasser) innerhalb von 2 Stunden zudosiert. Durch die Monomeren wird vorher 10 min lang ein Stickstoffstrom durchgeleitet. Nach einer weiteren Stunde bei 80°C wird das Reaktionsgemisch abgekühlt und zur Kontrolle über ein Filter mit 100 µ filtriert. Im Filter wird kein Rückstand gefunden. Man erhält eine weiße Dispersion des Polymeren in Wasser.

Polymer 15

Ein 500 ml Dreihalskolben mit Gaseinleitungsvorrichtung, Destillationsbrücke und Heizpilz wird mit 119,7 g Dodecenylbernsteinsäureanhydrid, 225 g Polyethylenglykol-($M_n = 1500$), 31,8 g Diethylenglykol und 3,77 g para-Toluolsulfonsäure-Monohydrat befüllt, auf 180°C aufgeheizt und 2 h bei 180°C gehalten. Anschließend wird die Temperatur auf 200°C angehoben und unter einem schwachen $N_2$-Strom Reaktionswasser abdestilliert. Man erhält ein gelbliches wachsartiges Produkt mit einem K-Wert von 23,5 (2 %ig in DMF).

Polymer 16

Ein 2 l Dreihalskolben mit Zulaufgefäß, Gaseinleitungsvorrichtung, Destillationsbrücke und Heizpilz wird mit 787 g Polyethylenglykol ($M_n = 1500$), 226,5 g Terephthalsäure, 189,0 g Ethylenglykol, 1,28 g para-Toluolsulfonsäure und 2,31 g phosphoriger Säure befüllt und nach 20 min. Spülung mit $N_2$ auf 200°C aufgeheizt. Man hält 2 h bei 200°C unter Abdestillieren von Ethylenglykol/Wasser-Gemisch und Zudosieren von 48 g Ethylenglykol. Anschließend wird die Temperatur langsam auf 245°C angehoben und unter einem schwachen $N_2$-Strom Reaktionswasser abdestilliert bis eine Säurezahl von 1,2 erreicht ist (7,3 Stunden). Anschließend wird im Vakuum (ca. 0,1 Torr) restliches Ethylenglykol abdestilliert. Man erhält ein gelbliches wachsartiges Produkt mit einem K-Wert von 18,9 (2 %ig in DMF).

Polymer 17

Ein 500 ml Dreihalskolben mit Zulaufgefäß, Gaseinleitungsvorrichtung, Destillationsbrücke und Heizpilz wird mit 305,8 g einseitig Methyl-verschlossenem Polyethylenglykol ($M_n = 750$), 75,0 g Terephthalsäure, 19,0 g Propylenglykol und 0,4 g para-Toluolsulfonsäure befüllt und nach 20 min. Spülung mit $N_2$ auf 200°C aufgeheizt. Man hält 2 h bei 200°C, wobei ein Propylenglykol/Wasser-Gemisch abdestilliert und dosiert weitere 24 g Propylenglykol zu. Anschließend wird die Temperatur langsam auf 250°C angehoben und unter einem schwachen $N_2$-Strom 12 Stunden Reaktionswasser/Propylenglykol abdestilliert. Danach wird für 1 Stunde ein Vakuum von ca. 0,1 Torr angelegt. Man erhält ein beiges wachsartiges Festprodukt mit einem K-Wert (2 %ig in Wasser) von 13,8.

Anwendungstechnische Beispiele

Um die Wirksamkeit der oben beschriebenen Polymeren beim Deinking zu demonstrieren, wurden sie jeweils in einer üblichen Standardrezeptur, die dem heutigen Stand der Technik entspricht, eingesetzt. Die Standardrezeptur gemäß Beispiel 1/0 - das Beispiel 1/0 ist ein Vergleichsbeispiel - wurde jeweils dadurch hergestellt, daß man 70 g einer Papiermischung aus 75 % Zeitungen und 25 % Illustrierten in 1330 g Wasser in einem Labordesintegrator bei einer Temperatur von 50°C zu einem Altpapierstoff mit einer Stoffdichte von 5 % aufschlug. Folgende Zusätze wurden direkt in den Desintegratortopf zugegeben, wobei sich die Angaben in % jeweils auf trockenen Stoff beziehen:

0,5 % Natronlauge

2 % Wasserglas

0,13 % einer Mischung aus Ethylendiamintetraessigsäure und Diethylentriaminpentaessigsäure, jeweils als Na-Salz im Gewichtsverhältnis 1:1

0,1 % des Natriumsalzes einer handelsüblichen Fettsäuremischung und

0,16% des Anlagerungsproduktes von 7 Mol Ethylenoxid an 1 Mol Nonylphenol.

Nachdem die oben beschriebene Papiermischung jeweils 5 Minuten aufgeschlagen wurde, fügte man 1 %, bezogenen auf trockenen Stoff, Wasserstoffperoxid zu und dispergierte das Gemisch anschließend noch 10 Minuten. Der Altpapierstoff wurde danach 1 Stunde bei 75°C im Wasserbad gelassen, um eine ausreichende Reaktionszeit zu gewährleisten. Danach wurde er in einer 15 l Flotationszelle der Firma Voith bei ca. 0,9 % Stoffdichte flotiert. Der Gutstoff wurde nach der Flotation durch Zugabe von Schwefelsäure auf einen pH-Wert von 6 eingestellt. Man saugte ca. 400 g der Stoffsuspension auf der Nutsche ab und trocknete das Blatt. Der Weißgrad wurde mit Hilfe eines Elrepho-Geräts bei 457 nm gemessen. Der angegebene Weißgrad des Standards ist ein Durchschnittswert aus 26 Messungen mit einer Standardabweichung von 0,89.

Die oben beschriebene Prozedur wurde bei den erfindungsgemäßen Beispielen 1/1 bis 1/17 wiederholt, wobei man jeweils die in Tabelle 2 angegebenen Polymeren in einer Menge von 0,2 bzw. 0,5 %, jeweils bezogen auf trockenen Stoff, in den Desintegratortopf zusetzte. In Tabelle 2 ist jeweils der Weißgrad von Blättern angegeben, die aus dem in Gegenwart der Polymeren 1 bis 17 jeweils hergestellten gereinigten Altpapierstoffe erhalten wurden.

Tabelle 2

| Beisp. Nr. | Art des Zusatzes | Weißgrad bei Zugabe von | | |
|---|---|---|---|---|
| | | 0 | 0,2 % | 0,5 % Polymer beim Deinken |
| 1/1 | Polymer 1 | | 51,6 | 52,5 |
| 1/2 | Polymer 2 | | 53,0 | 52,4 |
| 1/3 | Polymer 3 | | 55,5 | 54,4 |
| 1/4 | Polymer 4 | | 52,4 | 54,6 |
| 1/5 | Polymer 5 | | 52,4 | 52,4 |
| 1/6 | Polymer 6 | | 55,7 | 55,7 |
| 1/7 | Polymer 7 | | 53,8 | 55,4 |
| 1/8 | Polymer 8 | | 54,2 | 55,2 |
| 1/9 | Polymer 9 | | 53,9 | 55,1 |
| 1/10 | Polymer 10 | | 53,5 | 54,3 |
| 1/11 | Polymer 11 | | 52,1 | 55,0 |
| 1/12 | Polymer 12 | | 52,4 | 52,3 |
| 1/13 | Polymer 13 | | 53,1 | 55,2 |
| 1/14 | Polymer 14 | | 52,9 | 54,3 |
| 1/15 | Polymer 15 | | 55,3 | 56,5 |
| 1/16 | Polymer 16 | | 53,7 | 52,3 |
| 1/17 | Polymer 17 | | 53,4 | 52,9 |
| Vergleichsbeispiel | | | | |
| 1/0 | (Standard) | 49,9 | - | - |

## Beispiel 2

Die Standard-Rezeptur wurde dahingehend geändert, daß auf den Einsatz des Netzmittels, d.h. des Ethylenoxid-Adduktes an Nonylphenol, verzichtet wurde. Nach der in Beispiel 1 beschriebenen Methode des Deinkens wurden die in Tabelle 3 angegebenen Polymeren in Mengen von 0,2 bzw. 0,5 %, bezogen auf trockenen Stoff, in Abwesenheit von Netzmitteln beim Deinken getestet. Die dabei erhaltenen Ergebnisse sind in Tabelle 3 angegeben.

Tabelle 3

| | Weißgrad bei Zusatz von | |
|---|---|---|
| | 0,2 % | 0,5 % Polymer beim Deinken |
| Polymer 2 | 52,2 | 54,4 |
| Polymer 3 | 51,1 | 55,5 |
| Polymer 6 | 52,6 | 53,9 |
| Polymer 8 | 54,8 | 56,2 |
| Polymer 11 | 54,8 | 55,6 |
| Polymer 14 | 55,6 | 57,1 |
| Polymer 15 | 52,5 | 55,0 |

## Beispiel 3

Man verfährt wie im Beispiel 1 angegeben, stellt jedoch eine Standard-Rezeptur gemäß 1/0 ohne Na-Seife her und verwendet die in Tabelle 4 angegebenen Polymeren beim Deinking. Die dabei erhaltenen Ergebnisse sind in Tabelle 4 angegeben.

Tabelle 4

| | Weißgrad bei Zusatz von | |
| --- | --- | --- |
| | 0,2 % | 0,5 % Polymer beim Deinken |
| Polymer 4 | 50,9 | 54,6 |
| Polymer 6 | 52,5 | 53,3 |
| Polymer 15 | 50,6 | 57,4 |

Beispiel 4

Man verfährt wie in Beispiel 1 angegeben, stellt jedoch eine Standard-Rezeptur gemäß 1/0 her, die kein Tensid und keine Na-Seife enthält und verwendet die in Tabelle 5 angegebenen Polymeren als Deinkingmittel. Die so erhaltenen Ergebnisse sind in Tabelle 5 angegeben.

Tabelle 5

| | Weißgrad bei Zusatz von | |
| --- | --- | --- |
| | 0,2 % | 0,5 % Polymer beim Deinken |
| Polymer 4 | 51,8 | 51,4 |
| Polymer 6 | 53,2 | 55,0 |
| Polymer 15 | 53,5 | 56,0 |

**Patentansprüche**

1. Verfahren zum Deinking von bedruckten Papieren durch Aufschlagen der bedruckten Papiere in wäßrigem Medium in Gegenwart von wasserlöslichen Polymerisaten zu einem Altpapierstoff und anschließende Reinigung des Altpapierstoffs durch Wäsche oder Flotation, dadurch gekennzeichnet, daß man als wasserlösliche Polymerisate polymere amphiphile Verbindungen der Gruppen

   (I) Pfropfcopolymerisate, die 10 bis 90 Gew.-% nichtionische monoethylenisch ungesättigte Monomere auf wasserlöslichen Polyalkylenglykolen mit Molmassen von 300 bis 100 000 oder solche Polyalkylenglykolsegmente enthaltenden wasserlöslichen Verbindungen aufgepfropft enthalten,

   (II) Copolymerisate aus 10 bis 90 Gew.-% nichtionischen monoethylenisch ungesättigten Monomeren und 90 bis 10 Gew.-% Polyalkylenglykolsegmente einer Molmasse von 400 bis 10 000 enthaltenden ethylenisch ungesättigten Verbindungen,

   (III) Polykondensate, die erhältlich sind durch Kondensieren von mindestens zwei Carboxylgruppen aufweisenden Carbonsäuren und wasserlöslichen Polyalkylenglykolen mit Molmassen von 300 bis 10 000 oder solche Polyalkylenglykolsegmente enthaltenden gesättigten Verbindungen und gegebenenfalls zwei- oder mehrwertigen Alkoholen, ausgenommen Polykondensate, die zusätzlich Tallöl einkondensiert enthalten,

   oder Mischungen dieser Verbindungen in einer Menge von 0,05 bis 5 Gew.% bezogen auf Altpapier, einsetzt.

2. Verfahren nach Anspruch 1, dadurch gekennzeichnet, daß man als polymere amphiphile Verbindungen der Gruppe I Pfropfcopolymerisate einsetzt, die

   (a) Vinylester, Acrylsäureester und/oder Methacrylsäureester

   auf

   (b) Polyalkylenglykolen mit Molmassen von 1500 bis 9000 und/oder ethoxylierten $C_1$- bis $C_{18}$-Alkoholen mit Molmassen von 1000 bis 5000

   im Gewichtsverhältnis (a):(b) von 0,1:1 bis 5:1 aufgepfropft enthalten und K-Werte (bestimmt nach K. Fikentscher in 2 %iger Lösung in Wasser oder Dimethylformamid bei 25°C) von 10 bis 50 haben.

3. Verfahren nach Anspruch 1, dadurch gekennzeichnet, daß man als polymere amphiphile Verbindungen der Gruppe II Copolymerisate aus Vinylestern und Mono- oder Diestern aus Polyethylenglykolen einer Molmasse von 600 bis 2500 und monoethylenisch ungesättigten $C_3$- bis $C_5$-Carbonsäuren einsetzt.

4. Verfahren nach Anspruch 1 , dadurch gekennzeichnet, daß man als polymere amphiphile Verbindungen der Gruppe III Polyester aus
    (a) Terephthalsäure, Phthalsäure, Isophthalsäure, Bernsteinsäure, Dodecenylbernsteinsäure, Dodecylbernsteinsäure, Octenylbernsteinsäure, Octylbernsteinsäure, Adipinsäure oder deren Gemische,
    (b) Polyalkylenglykolen mit Molmassen von 800 bis 5000 und gegebenenfalls
    (c) Ethylenglykol oder Propylenglykol
eines Molekulargewichts von 1200 bis 30 000 einsetzt.

5. Verwendung von wasserlöslichen oder in Wasser dispergierbaren polymeren amphiphilen Verbindungen der Gruppen
    (I) Pfropfcopolymerisate, die 10 bis 90 Gew.-% nichtionische monoethylenisch ungesättigte Monomere auf wasserlöslichen Polyalkylenglykolen mit Molmassen von 300 bis 100 000 oder solche Polyalkylenglykolsegmente enthaltenden wasserlöslichen Verbindungen aufgepfropft enthalten,
    (II) Copolymerisate aus 10 bis 90 Gew.-% nichtionischen monoethylenisch ungesättigten Monomeren und 90 bis 10 Gew.-% Polyalkylenglykolsegmente einer Molmasse von 400 bis 10 000 enthaltenden ethylenisch ungesättigten Verbindungen,
    (III) Polykondensate, die erhältlich sind durch Kondensieren von mindestens zwei Carboxylgruppen aufweisenden Carbonsäuren und wasserlöslichen Polyalkylenglykolen mit Molmassen von 300 bis 10 000 oder solche Polyalkylenglykolsegmente enthalenden gesättigten Verbindungen und gegebenenfalls zwei- oder mehrwertigen Alkoholen, ausgenommen Polykondensate, die zusätzlich Tallöl einkondensiert enthalten,
oder Mischungen dieser Verbindungen als Mittel zum Deinking von bedruckten Papieren in einer Menge von 0,05 bis 5 Gew.-%, bezogen auf das eingesetzte Altpapier.

**Claims**

1. A process for deinking printed paper by beating the printed paper in an aqueous medium in the presence of water-solubles polymers to form a waste paper stock and then cleaning the waste paper stock by washing or flotation, characterized in that the polymers used are water-soluble polymeric amphiphilic compounds of the groups
    (I) graft copolymers containing from 10 to 90% by weight of a nonionic monoethylenically unsaturated monomer grafted onto a water-soluble polyalkylene glycol of molecular weight 300 - 100,000 or a water-soluble compound containing such a polyalkylene glycol segment,
    (II) copolymers of from 10 to 90% by weight of a non-ionic monoethylenically unsaturated monomer and from 90 to 10% by weight of an ethylenically unsaturated compound containing a polyalkylene glycol segment of molecular weight 400 - 10,000,
    (III) polycondensates obtainable by condensing a carboxylic acid having at least two carboxyl groups and a water-soluble polyalkylene glycol of molecular weight 300 - 10,000 or a saturated compound containing such a polyalkylene glycol segment and optionally a dihydric or more highly hydric alcohol, with the exception polycondensates which additionally contain tall oil, in cocondensed form
or mixtures thereof, in an amount of from 0.05 to 5% of the weight of waste paper.

2. A process as claimed in claim 1, characterized in that the polymeric amphiphilic compounds of group I are graft copolymers containing
    (a) a vinyl ester, an acrylic ester and/or a methacrylic ester grafted on
    (b) a polyalkylene glycol of molecular weight 1500 - 9000 and/or an ethoxylated $C_1$-$C_{18}$-alcohol of molecular weight 1000 - 5000
in a weight ratio of (a):(b) of from 0.1:1 to 5:1 and having a K value (determined by the method of K. Fikentscher in 2% strength solution in water or dimethylformamide at 25 °C) of from 10 to 50.

3. A process as claimed in claim 1, characterized in that the polymeric amphiphilic compounds of group II are copolymers of a vinyl ester and a mono- or diester of a polyethylene glycol of molecular weight 600 - 2500 and a monoethylenically unsaturated $C_3$-$C_5$-carboxylic acid.

12

4. A process as claimed in claim 1, characterized in that the polymeric amphiphilic compounds of group III are polyesters of

(a) terephthalic acid, phthalic acid, isophthalic acid, succinic acid, dodecenylsuccinic acid, dodecylsuccinic acid, octenylsuccinic acid, octylsuccinic acid, adipic acid or a mixture thereof,

(b) a polyalkylene glycol of molecular weight 800 - 5000 and optionally

(c) ethylene glycol or propylene glycol

of molecular weight 1200 - 30,000.

5. The use as an agent for deinking printed paper of a water-soluble or water-dispersible polymeric amphiphilic compounds of the groups

(I) graft copolymers containing from 10 to 90% by weight of a nonionic monoethylenically unsaturated monomer grafted onto a water-soluble polyalkylene glycol of molecular weight 300 - 100,000 or a water-soluble compound containing such a polyalkylene glycol segment,

(II) copolymers of from 10 to 90% by weight of a non-ionic monoethylenically unsaturated monomer and from 90 to 10% by weight of an ethylenically unsaturated compound containing a polyalkylene glycol segment of molecular weight 400 - 10,000,

(III) polycondensates obtainable by condensing a carboxylic acid having at least two carboxyl groups and a water-soluble polyalkylene glycol of molecular weight 300 - 10,000 or a saturated compound containing such a polyalkylene glycol segment and optionally a dihydric or more highly hydric alcohol, with the exception polycondensates which additionally contain tall oil, in condensed form

or mixtures thereof, in an amount of from 0.05 to 5% of the weight of waste paper used.

**Revendications**

1. Procédé de désencrage de papiers imprimés par battage des papiers imprimés en milieu aqueux et en présence de polymères solubles dans l'eau en une pâte de vieux papier et épuration subséquente de la pâte de vieux papier par lavage ou flottation, caractérisé en ce que l'on utilise, à titre de polymères solubles dans l'eau, des composés polymériques amphiphiles appartenant aux groupes

(I) des copolymères de greffage qui contiennent de 10 à 90% en poids de monomères monoéthyléniquement insaturés et non ioniques sur des polyalkylèneglycols solubles dans l'eau, qui possèdent des poids moléculaires de 300 à 100 000 ou des composés solubles dans l'eau qui contiennent des segments polyalkylèneglycol de ce genre,

(II) des copolymères de 10 à 90% en poids de monomères monoéthyléniquement insaturés et non ioniques et de 90 à 10% en poids de composés éthyléniquement insaturés, contenant des segments polyalkylèneglycol d'un poids moléculaire de 400 à 10 000,

(III) des produits de polycondensation, que l'on peut obtenir par la condensation d'au moins deux acides carboxyliques présentant des radicaux carboxyle et de polyalkylèneglycols solubles dans l'eau possédant des poids moléculaires de 300 à 10 000 ou de composés contenant des segments polyalkylèneglycol de ce genre et, éventuellement, des alcools bihydroxylés ou comportant plus de deux radicaux hydroxyle, à l'exclusion des produits de polycondensation qui contiennent complémentairement du tallöl incorporés par condensation,

ou des mélanges de ces composés, en une proportion de 0,05 à 5% en poids, par rapport au vieux papier.

2. Procédé suivant la revendication 1, caractérisé en ce que l'on utilise, à titre de composés polymériques amphiphiles du groupe I, des copolymères de greffage, qui contiennent

(a) des esters vinyliques, des esters de l'acide acrylique et/ou des esters de l'acide méthacrylique greffés sur

(b) des polyalkylèneglycols qui possèdent des poids moléculaire de 1500 à 9000 et/ou des alcools en $C_1$ à $C_{18}$ éthoxylés, qui possèdent des poids moléculaires de 1000 à 5000

dans le rapport pondéral (a):(b) de 0,1:1 à 5:1 et qui possèdent des valeurs K (déterminées selon K. Fikentscher en solution à 2% dans de l'eau ou dans du diméthylformamide à 25°C) de 10 à 50.

3. Procédé suivant la revendication 1, caractérisé en ce que l'on utilise, à titre de composés polymériques amphiphiles du groupe II, des copolymères d'esters vinyliques et de mono- ou diesters de polyéthylèneglycols d'un poids moléculaire de 600 à 2500 et d'acides carboxyliques en $C_3$ à $C_5$ monoéthyléniquement insaturés.

**4.** Procédé suivant la revendication 1, caractérisé en ce que l'on utilise, à titre de composés polymériques amphiphiles du groupe III, des polyesters

(a) de l'acide téréphtalique, de l'acide phtalique, de l'acide isophtalique, de l'acide succinique, de l'acide dodécénylsuccinique, de l'acide dodécylsuccinique, de l'acide octénylsuccinique, de l'acide octylsuccinique, de l'acide adipique, ou de leurs mélanges,

(b) de polyalkylèneglycols possédant des poids moléculaires de 800 à 5000 et, éventuellement,

(c) de l'éthylèneglycol ou du propylèneglycol,

d'un poids moléculaire de 1200 à 30 OOO.

**5.** Utilisation de composés polymériques amphiphiles solubles dans l'eau ou dispersibles dans l'eau, appartenant aux groupes formés

(I) des copolymères de greffage qui contiennent de 10 à 90% en poids de monomères monoéthyléniquement insaturés et non ioniques sur des polyalkylèneglycols solubles dans l'eau, qui possèdent des poids moléculaires de 300 à 100 000 ou des composés solubles dans l'eau qui contiennent des segments polyalkylèneglycol de ce genre,

(II) des copolymères de 10 à 90% en poids de monomères monoéthyléniquement insaturés et non ioniques et de 90 à 10% en poids de composés éthyléniquement insaturés, contenant des segments polyalkylèneglycol d'un poids moléculaire de 400 à 10 000,

(III) des produits de polycondensation, que l'on peut obtenir par la condensation d'au moins deux acides carboxyliques présentant des radicaux carboxyle et de polyalkylèneglycols solubles dans l'eau possédant des poids moléculaires de 300 à 10 000 ou de composés contenant des segments polyalkylèneglycol de ce genre et, éventuellement, des alcools bihydroxylés ou comportant plus de deux radicaux hydroxyle, à l'exclusion des produits de polycondensation qui contiennent complémentairement du tallöl incorporés par condensation,

ou des mélanges de ces composés, à titre d'agents pour le désencrage de papiers imprimés, en une proportion de 0,05 à 5% en poids par rapport au vieux papier mis en oeuvre.